# EUROPEAN PATENT SPECIFICATION

(11) **EP 4 301 191 B1**
(45) Date of publication and mention of the grant of the patent: **07.05.2025**
(21) Application number: 22713029.1
(22) Date of filing: 01.03.2022
(51) Int. Cl.: A47J 36/02, A47J 27/00

(54) **PROCESS FOR MAKING A CONTAINER FOR COOKING FOOD, MOULD FOR PROCESSING A CONTAINER AND CONTAINER FOR COOKING FOOD**
VERFAHREN ZUR HERSTELLUNG EINES BEHÄLTERS ZUM KOCHEN VON LEBENSMITTELN, FORM ZUR VERARBEITUNG EINES BEHÄLTERS UND BEHÄLTER ZUM KOCHEN VON LEBENSMITTELN
PROCÉDÉ DE FABRICATION D'UN RÉCIPIENT POUR LA CUISSON D'ALIMENTS, MOULE POUR LE TRAITEMENT D'UN RÉCIPIENT ET RÉCIPIENT POUR LA CUISSON D'ALIMENTS

(30) Priority: 01.03.2021 IT 202100004745
(43) Date of publication of application: 10.01.2024
(73) Proprietor: TVS S.p.A., 61033 Fermignano (PS) (IT)
(72) Inventor: BERTOZZINI, Giuseppe Alberto, 61033 Fermignano (Pesaro Urbino) (IT)
(74) Representative: Feltrinelli, Secondo Andrea
(86) International application number: PCT/IB2022/051783
(87) International publication number: WO 2022/185195

(56) References cited:
- CH-A2- 704 097
- IT-A1- 202100 016 421
- KR-A- 20130 102 172
- KR-B1- 100 722 397
- US-A1- 2005 045 624
- US-A1- 2006 118 548

## Description

### TECHNICAL FIELD OF THE INVENTION

The present invention relates to the process for making a container for cooking foods or aliments, and to the container itself. More specifically, the present invention relates to the process for making a container, as well as the container itself, particularly suitable for cooking food on plates operating by electromagnetic induction, but also other traditional fires.

### STATE OF THE ART

In the state of the art, different types of containers for cooking food, as well as processes for their realization, particularly suitable for being used on electromagnetic induction plates, such as pans, pots, skillets and the like are known.

Some types of container provide a bottom comprising or consisting of ferromagnetic material, associated on a main body of bowl shape and of non-ferromagnetic material according to different manufacturing processes.

The coupling of the bottom comprising ferromagnetic material with the main body allows to obtain a good technical result in the use of the container, in particular with induction-type heat sources, since the bottom with the ferromagnetic material heats up directly due to the eddy currents that are generated by the effect of the magnetic field produced by the induction source, thus transferring the heat in a very efficient way to the bowl in non-ferromagnetic material, which finally cooks the food.

The process for coupling the bottom to the main body can, for example, take place through moulding, brazing, impact bonding, and other ways, which include a series of laborious and expensive operations for processing the bottom and specific construction steps.

Documents KR20130102172A, CH704097A2 and KR100722397B disclose respective solutions according to the state of the art.

### OBJECTS OF THE INVENTION

The technical aim of the present invention is to improve the state of the art in the sector of making containers for cooking food.

Within this aim, it is an object of the present invention to develop a process for the production of a container for cooking food which allows to realize in a simple and economical way a bottom of the container suitable for being used on plates operating by means of electromagnetic induction, but also other traditional fires.

Another object of the present invention is to develop a process for making a container characterized by optimum stability of the bottom during use, i.e. during cooking on an energy source such as an induction plate or others, i.e. equipped with greater resistance to deformation of the bottom.

Another object of the present invention is to provide a container for cooking food having a high thermal efficiency for use with electromagnetic induction plates.

This aim and these objects are achieved by a process for making a container for cooking food according to claim 1.

Furthermore, this aim and these objects are achieved by a mould according to claim 7, and by a container for cooking food according to claim 10.

The dependent claims refer to preferred and advantageous embodiments of the invention.

### BRIEF DESCRIPTION OF THE DRAWINGS

Other features and advantages of the invention will be more evident from the description of an example of construction of a unit, illustrated as an indication in the accompanying drawings in which:
Figure 1 is an axonometric view from below of the main element of the container with the associated layer of pressed powders, according to the present invention;
Figure 2 is an axonometric view from below of a container made with the main element of Figure 1, according to the present invention;
Figure 3 is an axonometric view from above of a first type of mould to carry out a step of pressing a layer of powders on a main element of the container for cooking food, according to the present invention;
Figure 4 is a sectional side view of the mould of Figure 1;
Figure 5 is an axonometric view from above of a second type of mould to carry out a step of pressing a layer of powders on a main element of the container for cooking food and forming the container, according to the present invention; and Figure 6 is a sectional side view of the mould of Figure 5.

In the accompanying drawings, identical parts or components are indicated by the same reference numbers.

### EXAMPLES OF EMBODIMENT OF THE INVENTION

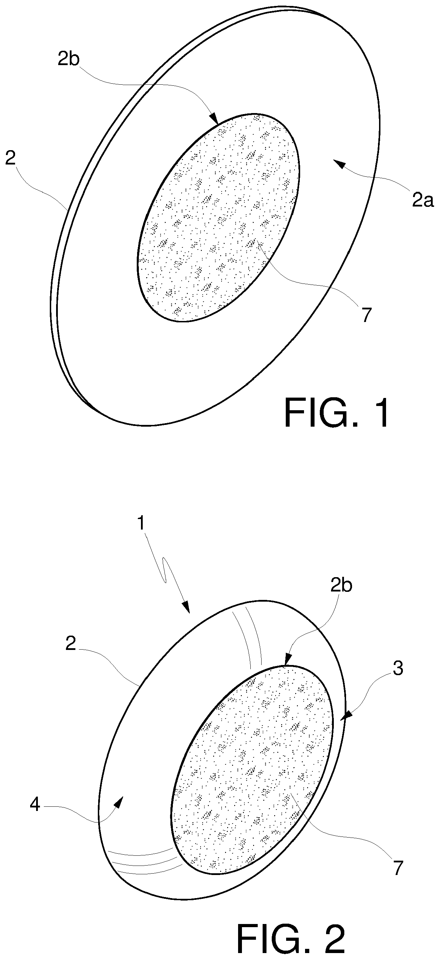

With reference to Figure 1, the number 1 generally indicates a container for cooking food according to the present invention.

The container 1 comprises a main element 2, made of a first material.

The main element 2, as long as the process for making the container 1 is not completed, has a substantially flattened discoidal shape, or the like, and which, once the manufacturing process has been completed, has a substantially concave shape, defining a bottom 3 and a side wall 4 of the container 1 inside which the food for cooking can be housed.

In order to make different types of containers 1, there is no restriction on the size or proportions of the bottom 3 and the side wall 4, thereby making it possible to produce, based on the need, pots, pans, skillets and the like.

By way of example, figure 2 illustrates a container 1 obtained from the main element 1 illustrated in figure 1.

The container 1 can be provided with any further accessory element, such as a permanent handle (not shown in the figures), which can be fixed with means and techniques known in the field, or even a removable handle or grip.

Furthermore, the container 1 comprises a layer 7, positioned on the external side of the bottom 3, made with powders 5 of a second material which heats up if subjected to magnetic fields, as will be described in more detail below.

According to the present invention, the process for making a container 1 for cooking food comprising a main element 2, equipped with a first surface 2a, this element 2 being intended to define a bottom 3, a side wall 4 and to be shaped with a substantially concave conformation, inside the container 1 being possible to house the food for cooking, and a layer 7, positioned on the outside of the bottom 3 in a portion 2b of the first surface 2a and obtained with powders 5 which are heated if subjected to magnetic fields, comprises the steps of:
providing at least one main element 2 of the container 1 made of a first metal material and defining at least one first surface 2a, which at the end of the processing will correspond to the outside of the bottom 3,
providing powders 5 of a second material selected from the group consisting of ferromagnetic materials, ferromagnetic ceramic materials and mixtures of ferromagnetic and ceramic materials and/or ferromagnetic ceramic materials,
providing at least one mould 6,
arranging at least the main element 2 and the powders 5 in the mould 6,
pressing the powders 5 of the second material into the mould 6 on at least one portion 2b of the first surface 2a of the main element 2, so as to attain at least one layer 7 of the second material associated at least with the portion 2b.

In particular, the second material is selected from the group composed of ferromagnetic materials such as inoxidizable ferromagnetic alloys and oxidizable ferromagnetic alloys, other ferromagnetic materials such as those based on carbon, for example graphite or graphene, ferromagnetic ceramic materials such as magnetite, and mixtures of such ferromagnetic materials and ferromagnetic ceramic materials.

Furthermore, mixtures of non-ferrous metal powders can be added for decorative purposes, such as for example Cu and related alloys.

The powders 5 can have a particle size between 45-200 µm.

The first metal material with which the main body 2 is made is of the non-ferromagnetic type, and for example comprises aluminum or aluminum alloy, for example aluminum alloys of the 3000 series or of the 4000 series.

More generally, the main body 2 comprises a metal material or metal alloy with high thermal conductivity, good workability and compatible with contact with food.

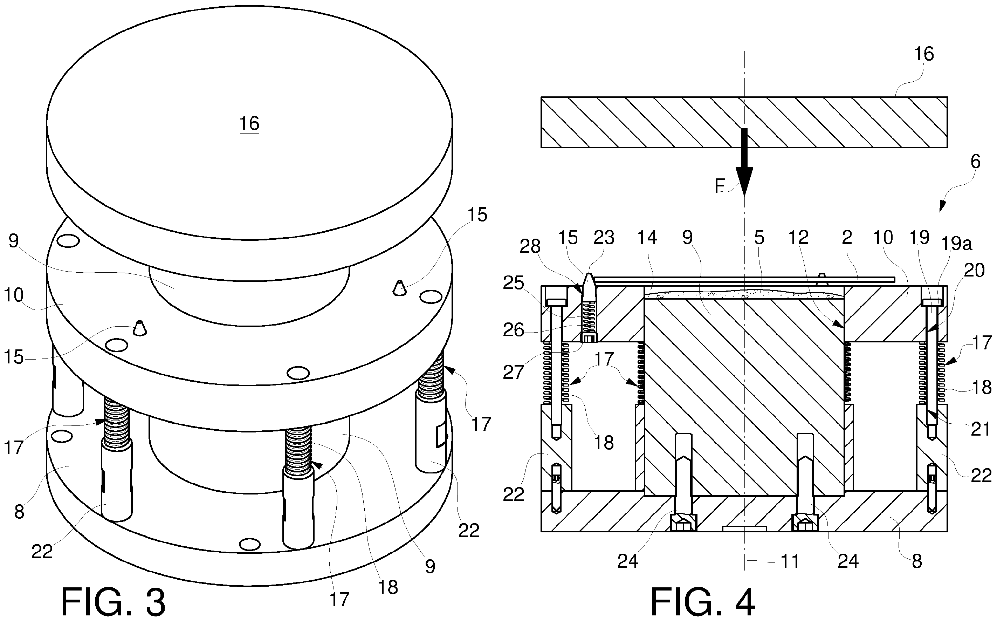

Figures 3 and 4 show the mould 6 of the first type in which the pressing mould is dedicated only to the pressing step.

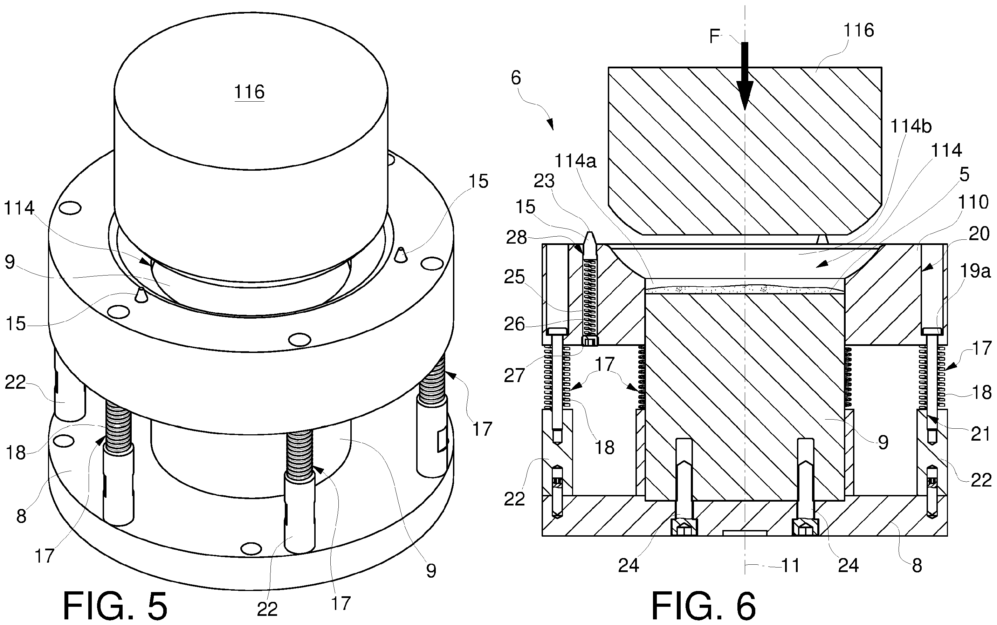

Figures 5 and 6 show the mould 6 of the second type in which the pressing mould is dedicated to the step of pressing and forming the container 1.

The process can also comprise a step of sintering the powders 5 carried out at predetermined temperature and duration and carried out by respective sintering means.

The sintering step of the powders 5 can take place during or after the pressing step.

The sintering means, not shown in the figures, can be provided directly in the mould 6 and, for example, can comprise an induction oven, or a roller oven, or can be of the HFHIS (High-Frequency Induction Heated Sintering) type, or of the laser-welded type, or even of another type.

More in detail, the sintering step takes place at a temperature between 900° C and 1300° C for a time interval between 0 and 10 seconds, and can be carried out in an ambient atmosphere, or in a controlled reducing atmosphere, or in a controlled atmosphere in oxygen debt.

If the process does not provide for a sintering step of the powders 5, i.e. the pressing step is not followed by a sintering step, then the process according to the present invention can comprise a heat treatment step at a temperature between 180° and 200° C and for a time of at least 20 minutes.

Thanks to the aforementioned heat treatment, there is a release of the deformation stresses accumulated during the pressing step and a principle of sintering which determines the formation of micro-welds, this contributes to the reduction of the electrical resistance of the layer 7 of powders 5, thereby improving the operating performance on the electromagnetic induction plates.

The process may further comprise a step of lubricating the powders 5 and/or the mould 6 with at least one lubricant, for example comprising organic and non-organic compounds; the lubricant can be mixed with the powders 5, and/or even distributed on the surfaces of the mould 6.

The process can also comprise a step of adding the powders 5 with an additive, which allows to increase the mechanical resistance of the layer being formed, in the pressing and sintering steps.

This additive can be, for example, copper or phosphorus to be added in an amount equal to 2-3% by weight of the powders 5, and graphite to be added in an amount equal to 0.2-0.8% by weight of the powders 5.

The pressing step can be carried out with a pressing force F between 1000 tons force and 5000 tons force, for example 3000 tons force on a powder coating diameter of 200 mm.

As mentioned, the main element 2 has an initial flattened conformation, for example discoidal having, by way of non-limiting example, a diameter between 175 and 570 mm, and the layer 7 of the pressed powders 5 can for example have a circular conformation with a diameter between 140-210 mm.

Said layer 7 of pressed powders 5 can have, again by way of non-limiting example, a thickness between 0.3 and 0.5 mm and a weight between 30 and 150 grams.

The process also includes a step of extracting the main element 2 from the mould 6 after the pressing step.

A step of forming the container 1 is also provided in which a substantially concave conformation of the main element 2 is achieved.

A step of painting with lacquer and/or surface protective treatment of the layer 7 of powders 5 can also be envisaged to increase its corrosion resistance properties.

The painting step can be carried out with silicone-polyester lacquers, silicone lacquers, porcelain enamel, Sol-gel coating, with PTFE (polytetrafluoroethylene), PES (polyetheresulfone), PFA (Perfluoroalkoxy).

The surface protective treatment step can be carried out through a plasma coating of ceramic materials, metallic materials or compounds of the two.

Furthermore, the surface protective treatment step can be carried out through one or more of the following processes:
physical vapor deposition (PVD), a deposition process in which the material is evaporated in the form of atoms from a solid source and transported in vapor form through a vacuum environment or in a controlled atmosphere to the substrate where it condenses; the evaporation of the source is generally obtained thermally by the Joule effect, for example through an electric discharge, a high-power laser or a plasma, by way of example, the following metallic materials can be deposited: Ti, Al, Cu, Au, Ag, etc. and the ceramic materials: TiN (titanium nitride), AlN (aluminum nitride), Si3N4 (silicon nitride), SiC (silicon carbide), TiCN (titanium carbo-nitride);
chemical vapor deposition (CVD), the chemical vapor deposition process is an atomic deposition process in which the synthesis material deposited on the substrate derives from the decomposition and condensation of one or more gaseous precursors in a controlled atmosphere and temperature; this type of coatings has high corrosion resistance, mechanical and adhesion properties to the substrate, by way of example, the following metallic materials: Ti, Al, Cu, Au, Ag, etc., and ceramic materials: TiN (titanium nitride ), AlN (aluminum nitride), Si3N4 (silicon nitride), SiC (silicon carbide), TiCN (titanium carbo-nitride) can be deposited;
tempering to blue or bluing, is a tempering treatment carried out in an ambient atmosphere around 300-350 ° C which in carbon steels determines the formation of a compact layer of magnetite (Fe[O4) adhered to the surface of the product; the aforesaid layer has a better resistance to corrosion and better paintability, that is a better aptitude to be painted.

The subject-matter of the present invention is also a mould 6 for processing a container 1 comprising at least one main element 2 made of the first material and a layer 7 of powders 5 in the second material.

Figures 3 and 4 show a first type of mould which is capable of carrying out only the step of pressing a layer of powders onto a main element 2 of the container 1, while the final forming step of the container will be carried out with another mould (not illustrated).

The mould 6 comprises at the bottom a support base 8 to which a piston 9 is fixed, equipped with axis 11, by means of fixing screws 24, and a mobile die 10, which has an internal through shaped cavity 12 for a sliding coupling with piston 9.

The cavity 12 and the piston 9 define at least one chamber 14 for loading the powders 5 of the second material.

On the opposite side to the coupling side on the piston 9, the matrix 10 comprises centring means 15 to house and center the main element 2 of the container 1.

The centring means 15 comprise at least three rods 23 arranged substantially at an angular distance equal to each other, on a circumference concentric with the axis 11, each rod 23 is equipped with a frustoconical tip to facilitate the centring of the main element 2.

More in detail, to constitute an effective centring of the main element 2, the rods 23 must be at least three, arranged at about 120°, naturally the rods 23 can also be more than three, always arranged on a circumference concentric with respect to the axis 11, and substantially at an angular distance equal to each other, for example: four rods 23 arranged at 90°, five rods 23 arranged at 72°, and so on.

Each rods 23 can also re-enter the upper surface of the matrix 10 and, for this purpose, the matrix 10 comprises holes 25, a hole 25 for each rod 23.

Each rod 23 is therefore sliding within its own hole 25 and is pressed upwards by a respective spring 26 which is in turn blocked within the hole 25 by means of a locking grub 27; in proximity to the upper surface of the matrix 10, the hole 25 has a smaller diameter, with an annular seat 28, and a corresponding projection in the rod 23 which prevents the rod from coming out from above.

The main element 2 can have an external diameter greater than the diameter defined by the internal portions of the rods 23 and, therefore, when the element 2 is inserted into the matrix 10, it can rest on the conical parts of the rods 23, being raised with respect to the upper surface of the matrix 10, as illustrated for example in figure 4.

However, since the rods 23 can re-enter inside the matrix 10, during the step of pressing the powders 5, the main element 2 can rest on the upper surface of the matrix 10, also allowing the correct pressing of the powders 5 in the foreseen portion 2b.

The mould 6 comprises at the top a punch 16 which is movable, along the axis 11 of the piston 9, from an inactive configuration, in which the punch 16 is separated from the main element 2 housed on the die 10 and the volume of the aforementioned chamber 14 loaded with the powders 5 is maximum, to a pressing configuration, in which said punch 16 is pressed on the main element 2 so as to push the die 10 towards the base 8, reduce the volume of the chamber 14 and press the powders 5 between the main element 2 and the piston 9, in this way the powders 5 are pressed and coupled to the main element 2 so as to form the layer 7 of the second material joined on the external side of the main element 2.

The chamber 14 has a reduction ratio for example between 2-2.5.

The mould 6 also comprises contrast means 17 of the elastic type that oppose the movement of the matrix 10 towards the base 8 according to the axis 11 of the piston 9.

In particular, the contrast means 17 comprise a distribution of springs 18 inserted on respective spring-guide screws 19 parallel to the axis 11; the spring-guide screws 19 are inserted from one end into provided first holes 20 of the mobile matrix 10 and from the other end into provided second threaded holes 21 formed in supports 22, in turn fixed to the base 8.

According to another version of the present invention, the contrast means 17 comprise a plurality of pneumatic elements (not shown), for example gas springs.

The spring-guide screws 19 comprise collars 19a for holding the matrix 10 which slides for a predefined travel within the first holes 20.

It should be noted that the contrast means 17 also cause the detachment of the main element 2 from the matrix 10, after the pressing step, and therefore the main element 2 can be picked up, for example, by means of a robotic arm (not shown).

The mould can also comprise a hopper for loading the powders 5 into the chamber 14; the hopper is not shown in the figures.

Figures 5 and 6 show a second type of mould which is capable of carrying out both the step of pressing a layer of powders onto a main element 2 of the container 1, and the step of forming the container 1.

In these figures 5, 6 the identical components are identified by the same reference numbers as in figures 3, 4.

It can be noted a different punch 116, which has a convex conformation, and a different die 110, which has a concave conformation, both of the aforementioned elements, punch 116 and die 110, are thus made to provide the final concave shape to the container 1, starting from the main element 2, flat, with the layer 7 of powders 5 fixed to the portion 2b of the main element 2.

The matrix 110 defines a chamber 114 which has a first loading zone 114a for pressing the powders 5 of the second material on the main element 2 and a second zone 114b for the final forming of the container 1.

Furthermore, since the punch 116 performs a longer stroke, the first holes 20 which are in the die 110 are deeper to allow for a longer predefined travel than that of the first type of mould described above.

Also the extraction of the container 1 from the matrix 110, after the forming step, is produced by the contrast means 17, so the container 1 can be taken, for example, by means of a robotic arm (not shown) which acts on the matrix 110.

The container 1 for cooking food is therefore made, as mentioned, according to the method described above, starting from a main element 2 having a substantially flattened conformation, for example discoidal, or the like.

The container 1, at the end of the manufacturing process, comprises a main element 2 having a substantially concave conformation made in the described first metal material and defining a bottom 3 and a wall 4 connected to each other; on at least the portion 2b of the main element 2 is coupled at least one layer 7 of pressed powders 5 of the second material.

As mentioned, the second material is selected from the group composed of ferromagnetic materials, ceramic materials and mixtures of ferromagnetic and ceramic materials.

It has thus been seen how the invention fully achieves the proposed purposes.

The described process allows to realize a layer 7 on the bottom 3 of the container 1 in a simple and economical way, with respect to the known methods, starting from powders 5 of a suitable second material, selected from the group composed of ferromagnetic materials, ceramic materials and mixtures of ferromagnetic and ceramic materials, pressed and joined, in the mould 6, to the main element 2.

The container 1, made with the described procedure, comprising on the bottom 3 the layer 7 of pressed powders 5, is suitable for use on plates operating by electromagnetic induction, but also other traditional fires; and again thanks to the presence of the layer 7, the container 1 allows a high thermal efficiency when using the container on electromagnetic induction plates.

Furthermore, thanks to the characteristics of the second material of the layer 7, and to the possible mixing of the additive described, the bottom 3 is less subject to deformation when using the container 1 for cooking food.

The layer 7 of powders 5 can also be painted with lacquer and/or provided with a protective surface treatment to increase its corrosion resistance properties, with the materials and protective processes described above.

Changes and variants of the invention are possible within the scope defined by the claims.

## Claims

1. Process for making a container (1) for cooking foods comprising a main element (2), provided with a first surface (2a), such element (2) being intended to define a bottom (3), a lateral wall (4) of the container (1) and to be shaped with substantially concave conformation, within said container (1) it being possible to house said foods for cooking, and a layer (7), positioned on the outside of the bottom (3) in a portion (2b) of the first surface (2a) and attained with powders (5) which are heated if subjected to magnetic fields, the process comprising the steps of:
providing at least one main element (2) of said container (1) made of a first metal material and defining at least one first surface (2a) which at the end of processing will correspond with the outside of said bottom (3);
providing powders (5) of a second material selected from the group consisting of ferromagnetic materials, ferromagnetic ceramic materials and mixtures of ferromagnetic materials and ferromagnetic ceramic materials; the process being **characterized in that** it further comprises the steps of:
providing at least one mould (6),
arranging at least said main element (2) and said powders (5) in said at least one mould (6),
pressing in said mould (6) said powders (5) of said second material on at least one portion (2b) of at least said first surface (2a) of said main element (2), so as to attain at least one layer (7) of said second material associated with at least said portion (2b).

2. Process according to claim 1, wherein said second material is selected from the group consisting of ferromagnetic materials such as inoxidizable ferromagnetic alloys and oxidizable ferromagnetic alloys, other ferromagnetic materials such as graphite or graphene, ferromagnetic ceramic materials such as magnetite, and mixtures of such ferromagnetic and ferromagnetic ceramic materials.

3. Process according to one of the preceding claims, wherein said first metal material is of non-ferromagnetic type.

4. Process according to one or more of the preceding claims, comprising a step of sintering said powders (5) carried out at pre-established temperature and duration by respective sintering means during or after said pressing step.

5. Process according to claim 4, comprising the step of adding said powders (5) with an additive adapted to increase the mechanical strength of said powders (5), in said pressing step and in said sintering step.

6. Process, according to the preceding claim, wherein said additive is selected from the group consisting of copper or phosphorus to be added in a quantity equal to 2-3% by weight of said powders (5), and graphite to be added in a quantity equal to 0.2-0.8% by weight of said powders (5).

7. Mould (6) for processing a container (1) provided with at least one main element (2) made of a first material and a layer (7) joined to said main element (2), said layer (7) being formed by powders (5) of a second material that is heated if subjected to magnetic fields, said mould (6) comprising:
at least one support base (8);
at least one piston (9) fixed to said base (8);
at least one movable die (10; 110), associated with said base (8), provided with at least one shaped internal cavity (12) where said piston (9) is situated in slidable coupling along an axis (11);
said cavity (12) and said piston (9) defining at least one chamber (14; 114) for loading powders (5) of a second material, said die (10; 110) defining, on the side opposite that of coupling with said piston (9), at least centring means (15) for at least one said main element (2),
and at least one punch (16; 116) being provided movable according to said axis (11) from an inactive configuration, in which said punch (16; 116) is separated from said main element (2) housed on said die (10; 110) and the volume of said chamber (14; 114) is maximum, to a pressing configuration, in which said punch (16; 116) is pressed on said main element (2) so as to push said die (10; 110) towards said base (8), reducing the volume of said chamber (14; 114) between said main element (2) and said piston (9) and pressing said powders (5) against said main element (2), thereby forming said layer (7).

8. Mould (6) according to the preceding claim, wherein said chamber (114) comprises a first zone (114a) for pressing said powders (5) of the second material on said main element (2) and a second zone (114b) wherein said main element (2) is shaped with a substantially concave shape for the final formation of the container (1).

9. Mould (6) according to claim 7 or 8, wherein said centring means (15) for said main element (2) comprise at least three rods (23) arranged substantially at angular distance equal to each other, on a circumference that is concentric with said axis (11), each rod (23) being provided with a frustoconical tip in order to facilitate the centring of said main element (2).

10. Container (1) for cooking foods attained by means of the process according to one of claims 1-6, comprising said main element (2), shaped with substantially concave conformation within which the foods for cooking can be housed, made of said first metal material and defining a bottom (3) and a lateral wall (4) that are connected to each other, wherein on at least said portion (2b) of said main element (2), at least one layer (7) attained with said pressed powders (5) of said second material, positioned on the outside of the bottom (3), is joined.

11. Container (1) for cooking food according to claim 10, wherein said second material of said powders (5) is selected from the group composed of ferromagnetic materials, ferromagnetic ceramic materials and mixtures of ferromagnetic materials and ferromagnetic ceramic materials.

12. Container (1) for cooking food according to claim 10 or 11, wherein said powders (5) are sintered or heat treated at a predetermined temperature and duration.

13. Container (1) for cooking food according to any one of claims from 10 to 12, wherein said powders (5) comprise an additive able to increase the mechanical resistance of the same when pressed and/or sintered.

14. Container (1) for cooking food according to any one of claims 10 to 13, wherein said powders (5) have a particle size comprised between 45 µm and 200 µm.

15. Container (1) for cooking food according to any one of claims 10 to 14, wherein said powders (5) have a thickness between 0.3 mm and 0.5 mm and a weight between 3 grams and 150 grams.

## Patentansprüche

1. Verfahren zur Herstellung eines Behälters (1) zum Kochen von Lebensmitteln, umfassend ein Hauptelement (2), das mit einer ersten Oberfläche (2a) versehen ist, wobei ein solches Element (2) dazu bestimmt ist, einen Boden (3), eine Seitenwand (4) des Behälters (1) zu definieren und mit einer im Wesentlichen konkaven Gestalt geformt zu werden, wobei es innerhalb des besagten Behälters (1) möglich ist, die besagten Lebensmittel zum Kochen unterzubringen, und eine Schicht (7), die an der Außenseite des Bodens (3) in einem Abschnitt (2b) der ersten Oberfläche (2a) angeordnet ist und mit Pulvern (5) erhalten wird, die erhitzt werden, wenn sie Magnetfeldern ausgesetzt werden, wobei das Verfahren die Schritte umfasst des:
Bereitstellens von mindestens einem Hauptelement (2) des besagten Behälters (1), das aus einem ersten metallischen Material besteht und mindestens eine erste Oberfläche (2a) definiert, die am Ende der Bearbeitung mit der Außenseite des besagten Bodens (3) übereinstimmt;
Bereitstellens von Pulvern (5) eines zweiten Materials, das aus der Gruppe bestehend aus ferromagnetischen Materialien, ferromagnetischen keramischen Materialien und Mischungen aus ferromagnetischen Materialien und ferromagnetischen keramischen Materialien ausgewählt ist; das Verfahren ist **dadurch gekennzeichnet, dass** es ferner die Schritte umfasst des:
Bereitstellens von mindestens einer Form (6),
Anordnens von mindestens dem besagten Hauptelement (2) und den besagten Pulvern (5) in der besagten mindestens einen Form (6),
Pressens in der besagten Form (6) der besagten Pulver (5) des besagten zweiten Materials auf mindestens einen Abschnitt (2b) von mindestens der besagten ersten Oberfläche (2a) des besagten Hauptelements (2), um mindestens eine Schicht (7) des besagten zweiten Materials zu erhalten, die mit mindestens dem besagten Abschnitt (2b) verbunden ist.

2. Verfahren nach Anspruch 1, worin das besagte zweite Material aus der Gruppe bestehend aus ferromagnetischen Materialien wie inoxidierbaren ferromagnetischen Legierungen und oxidierbaren ferromagnetischen Legierungen, anderen ferromagnetischen Materialien wie Graphit oder Graphen, ferromagnetischen keramischen Materialien wie Magnetit und Mischungen aus solchen ferromagnetischen und ferromagnetischen keramischen Materialien ausgewählt ist.

3. Verfahren nach einem der vorangegangenen Ansprüche, worin das besagte erste metallische Material dem nichtferromagnetischen Typ entspricht.

4. Verfahren nach einem oder mehreren der vorangegangenen Ansprüche, umfassend einen Schritt des Sinterns der besagten Pulver (5), der bei vorgegebener Temperatur und Dauer durch jeweilige Sintermittel während oder nach dem besagten Pressschritt ausgeführt wird.

5. Verfahren nach Anspruch 4, umfassend den Schritt des Zugebens eines Additivs zu den besagten Pulvern (5), das geeignet ist, die mechanische Festigkeit der besagten Pulver (5) in dem besagten Pressschritt und in dem besagten Sinterschritt zu erhöhen.

6. Verfahren nach dem vorangegangenen Anspruch, worin das besagte Additiv aus der Gruppe bestehend aus Kupfer oder Phosphor, die in einer Menge von gleich 2-3 Gewichts-% der besagten Pulver (5) zugegeben werden, und Graphit, der in einer Menge von gleich 0,2 bis 0,8 Gewichts-% der besagten Pulver (5) zugegeben wird, ausgewählt wird.

7. Form (6) zur Bearbeitung eines Behälters (1), versehen mit mindestens einem Hauptelement (2) bestehend aus einem ersten Material und einer mit dem besagten Hauptelement (2) verbundenen Schicht (7), wobei die besagte Schicht (7) aus Pulvern (5) eines zweiten Materials gebildet ist, das erhitzt wird, wenn es Magnetfeldern ausgesetzt wird, wobei die besagte Form (6) umfasst:
mindestens eine Tragbasis (8);
mindestens einen Kolben (9), der an der besagten Basis (8) befestigt ist;
mindestens eine bewegliche Matrize (10; 110), verbunden mit der besagten Basis (8), die mit mindestens einem geformten inneren Hohlraum (12) versehen ist, in dem der besagte Kolben (9) in gleitbarer Kupplung entlang einer Achse (11) angeordnet ist;
wobei der besagte Hohlraum (12) und der besagte Kolben (9) mindestens eine Kammer (14; 114) zum Laden von Pulvern (5) eines zweiten Materials definieren, wobei die besagte Matrize (10; 110) auf der Seite, die derjenigen der Kupplung mit dem besagten Kolben (9) gegenüberliegt, mindestens Zentriermittel (15) für mindestens ein besagtes Hauptelement (2) definiert,
und mindestens einen Stempel (16; 116), der gemäß der besagten Achse (11) beweglich vorgesehen ist von einer inaktiven Konfiguration, in der der besagte Stempel (16; 116) von dem besagten Hauptelement (2), untergebracht auf der besagten Matrize (10; 110), getrennt ist und das Volumen der besagten Kammer (14; 114) maximal ist, zu einer Presskonfiguration, in der der besagte Stempel (16; 116) auf das besagte Hauptelement (2) gepresst wird, sodass die besagte Matrize (10; 110) zu der besagten Basis (8) hin gedrückt wird, um das Volumen der besagten Kammer (14; 114) zwischen dem besagten Hauptelement (2) und dem besagten Kolben (9) zu verringern und die besagten Pulver (5) gegen das besagte Hauptelement (2) gepresst werden, wodurch die besagte Schicht (7) gebildet wird.

8. Form (6) nach dem vorangegangenen Anspruch, worin die besagte Kammer (114) eine erste Zone (114a) zum Pressen der besagten Pulver (5) des zweiten Materials auf das besagte Hauptelement (2) und eine zweite Zone (114b), worin das besagte Hauptelement (2) mit einer im Wesentlichen konkaven Form für die endgültige Bildung des Behälters (1) geformt wird, umfasst.

9. Form (6) nach Anspruch 7 oder 8, worin die besagten Zentriermittel (15) für das besagte Hauptelement (2) mindestens drei Stangen (23) umfassen, die im Wesentlichen in gleichem Winkelabstand voneinander auf einem Umfang, der konzentrisch zu der besagten Achse (11) ist, angeordnet sind, wobei jede Stange (23) mit einer kegelstumpfförmigen Spitze versehen ist, um die Zentrierung des besagten Hauptelements (2) zu erleichtern.

10. Behälter (1) zum Kochen von Lebensmitteln, erhalten mittels des Verfahrens nach einem der Ansprüche 1-6, umfassend das besagte Hauptelement (2), geformt mit einer im Wesentlichen konkaven Gestalt, in dem die Lebensmittel zum Kochen untergebracht werden können, bestehend aus dem besagten ersten metallischen Material und definierend einen Boden (3) und eine Seitenwand (4), die miteinander verbunden sind, worin auf mindestens dem besagten Abschnitt (2b) des besagten Hauptelements (2) mindestens eine Schicht (7), erhalten mit den besagten gepressten Pulvern (5) des besagten zweiten Materials, angeordnet an der Außenseite des Bodens (3), verbunden ist.

11. Behälter (1) zum Kochen von Lebensmitteln nach Anspruch 10, worin das besagte zweite Material der besagten Pulver (5) aus der Gruppe ausgewählt ist, die aus ferromagnetischen Materialien, ferromagnetischen keramischen Materialien und Mischungen aus ferromagnetischen Materialien und ferromagnetischen keramischen Materialien besteht.

12. Behälter (1) zum Kochen von Lebensmitteln nach Anspruch 10 oder 11, worin die besagten Pulver (5) bei einer vorbestimmten Temperatur und Dauer gesintert oder wärmebehandelt werden.

13. Behälter (1) zum Kochen von Lebensmitteln nach einem der Ansprüche 10 bis 12, worin die besagten Pulver (5) ein Additiv umfassen, das fähig ist, die mechanische Festigkeit desselben beim Pressen und/oder Sintern zu erhöhen.

14. Behälter (1) zum Kochen von Lebensmitteln nach irgendeinem der Ansprüche 10 bis 13, worin die besagten Pulver (5) eine Partikelgröße aufweisen, die zwischen 45 µm und 200 µm liegt.

15. Behälter (1) zum Kochen von Lebensmitteln nach irgendeinem der Ansprüche 10 bis 14, worin die besagten Pulver (5) eine Dicke zwischen 0,3 mm und 0,5 mm und ein Gewicht zwischen 3 Gramm und 150 Gramm aufweisen.

## Revendications

1. Procédé pour fabriquer un récipient (1) destiné à cuire des aliments comprenant un élément principal (2), doté d'une première surface (2a), cet élément (2) étant conçu pour définir un fond (3), une paroi latérale (4) du récipient (1) et pour être formé de manière sensiblement concave, lesdits aliments pouvant être contenus à l'intérieur dudit récipient (1) pour être cuisinés, et une couche (7), positionnée à l'extérieur du fond (3) dans une partie (2b) de la première surface (2a) et obtenu avec des poudres (5) qui sont chauffées si elles sont soumises à des champs magnétiques, le procédé comprenant les étapes de :
fournir au moins un élément principal (2) dudit récipient (1) réalisé dans une première matière métallique et définissant au moins une première surface (2a) qui correspondra à la fin du traitement à l'extérieur dudit fond (3) ;
fournir des poudres (5) d'une deuxième matière sélectionnée parmi le groupe composé de matières ferromagnétiques, matières céramiques ferromagnétiques et de mélanges de matières ferromagnétiques et de matières céramiques ferromagnétiques ; le procédé étant **caractérisé en ce qu'**il comprend en outre les étapes de :
fournir au moins un moule (6),
disposer au moins ledit élément principal (2) et lesdites poudres (5) dans ledit au moins un moule (6),
presser dans ledit moule (6) lesdites poudres (5) de ladite deuxième matière sur au moins une partie (2b) d'au moins ladite première surface (2a) dudit élément principal (2), de façon à obtenir au moins une couche (7) de ladite deuxième matière associée à au moins ladite partie (2b).

2. Procédé selon la revendication 1, dans lequel ladite deuxième matière est sélectionnée parmi le groupe composé de matières ferromagnétiques telles que des alliages ferromagnétiques inoxydables et des alliages ferromagnétiques oxydables, d'autres matières ferromagnétiques telles que le graphite ou le graphène, des matières céramiques ferromagnétiques telles que la magnétite, et des mélanges de ces matières ferromagnétiques et matières céramiques ferromagnétiques.

3. Procédé selon l'une des revendications précédentes, dans lequel ladite première matière métallique est du type non-ferromagnétique.

4. Procédé selon l'une ou plusieurs des revendications précédentes, comprenant une étape de frittage desdites poudres (5) réalisée à une température et une durée prédéterminées par des moyens de frittage respectifs pendant ou après ladite étape de pressage.

5. Procédé selon la revendication 4, comprenant l'étape d'additionner lesdites poudres (5) avec un additif adapté pour augmenter la résistance mécanique desdites poudres (5), dans ladite étape de pression et dans ladite étape de frittage.

6. Procédé selon la revendication précédente, dans lequel ledit additif est sélectionné parmi le groupe composé de cuivre ou de phosphore qui doit être ajouté en quantité égale à 2-3 % par poids desdites poudres (5), et de graphite qui doit être ajouté en quantité égale à 0,2-0,8 % par poids desdites poudres (5).

7. Moule (6) pour traiter un récipient (1) doté d'au moins un élément principal (2) constitué d'une première matière et d'une couche (7) jointe audit élément principal (2), ladite couche (7) étant formée par des poudres (5) d'une deuxième matière qui est chauffée si elle est soumise à des champs magnétiques, ledit moule (6) comprenant :
au moins une base de support (8) ;
au moins un piston (9) fixé à ladite base (8) ;
au moins une matrice mobile (10 ; 110), associée à ladite base (8), dotée d'au moins une cavité interne façonnée (12) dans laquelle ledit piston (9) est situé en accouplement coulissant le long d'un axe (11) ;
ladite cavité (12) et ledit piston (9) définissant au moins une chambre (14 ; 114) pour charger les poudres (5) d'une deuxième matière, ladite matrice (10 ; 110) définissant, sur le côté opposé à celui de l'accouplement avec ledit piston (9), au moins des moyens de centrage (15) pour au moins un ledit élément principal (2),
et au moins un poinçon (16 ; 116) étant prévu pour être mobile selon ledit axe (11) d'une configuration inactive, dans laquelle ledit poinçon (16 ; 116) est séparé dudit élément principal (2) contenu dans ladite matrice (10 ; 110) et le volume de ladite chambre (14 ; 114) est maximum, à une configuration de pressage, dans laquelle ledit poinçon (16 ; 116) est pressé sur ledit élément principal (2) de façon à pousser ladite matrice (10 ; 110) vers ladite base (8), réduisant le volume de ladite chambre (14 ; 114) entre ledit élément principal (2) et ledit piston (9) et pressant lesdites poudres (5) contre ledit élément principal (2), formant ainsi ladite couche (7).

8. Moule (6) selon la revendication précédente, dans lequel ladite chambre (114) comprend une première zone (114a) pour presser lesdites poudres (5) de la deuxième matière sur ledit élément principal (2) et une deuxième zone (114b) dans laquelle ledit élément principal (2) est de forme sensiblement concave pour la formation finale du récipient (1).

9. Moule (6) selon la revendication 7 ou 8, dans lequel lesdits moyens de centrage (15) pour ledit élément principal (2) comprennent au moins trois tiges (23) disposées sensiblement à une distance angulaire égale l'une de l'autre, sur une circonférence qui est concentrique avec ledit axe (11), chaque tige (23) étant dotée d'une extrémité tronconique afin de faciliter le centrage dudit élément principal (2).

10. Récipient (1) destiné à cuire des aliments obtenu grâce au procédé selon l'une des revendications 1 à 6, comprenant ledit élément principal (2), de forme sensiblement concave, dans lequel les aliments à cuisiner peuvent être contenus, constitué de ladite première matière métallique et définissant un fond (3) et une paroi latérale (4) reliés l'un à l'autre, dans lequel sur au moins ladite partie (2b) dudit élément principal (2), au moins une couche (7) obtenue avec lesdites poudres (5) pressées de ladite deuxième matière, positionnée à l'extérieur du fond (3), est jointe.

11. Récipient (1) destiné à cuire des aliments selon la revendication 10, dans lequel ladite deuxième matière desdites poudres (5) est sélectionnée parmi le groupe composé de matières ferromagnétiques, de matières céramiques ferromagnétiques et de mélanges de matières ferromagnétiques et de matières céramiques ferromagnétiques.

12. Récipient (1) destiné à cuire des aliments selon la revendication 10 ou 11, dans lequel lesdites poudres (5) sont frittées ou traitées thermiquement à une température et une durée prédéterminées.

13. Récipient (1) destiné à cuire des aliments selon l'une quelconque des revendications 10 à 12, dans lequel lesdites poudres (5) comprennent un additif capable d'augmenter leur résistance mécanique quand elles sont pressées et/ou frittées.

14. Récipient (1) destiné à cuire des aliments selon l'une quelconque des revendications 10 à 13, dans lequel lesdites poudres (5) ont une taille de particule comprise entre 45 µm et 200 µm.

15. Récipient (1) destiné à cuire des aliments selon l'une quelconque des revendications 10 à 14, dans lequel lesdites poudres (5) ont une épaisseur comprise entre 0,3 mm et 0,5 mm et un poids compris entre 3 grammes et 150 grammes.
